# EUROPÄISCHE PATENTSCHRIFT

(11) **EP 0 985 905 B1**
(45) Veröffentlichungstag und Bekanntmachung des Hinweises auf die Patenterteilung: **13.07.2005**
(21) Anmeldenummer: 99114413.0
(22) Anmeldetag: 22.07.1999
(51) Int. Cl.: G01B 17/02, G01N 29/28

(54) **Scanner in einer Wanddickenmessvorrichtung für Rohre mit Ultraschallsensoren**
Ultrasonic scanner for measuring wall thickness of pipes
Dispositif de balyage à ultrasons pour mesurer l'épaisseur des parois de tubes

(30) Priorität: 09.09.1998 DE 19841064
(43) Veröffentlichungstag der Anmeldung: 15.03.2000
(73) Patentinhaber: INOEX GmbH, 32547 Bad Oeynhausen (DE)
(72) Erfinder: Schulze, Thorsten, 32549 Bad Oeynhausen (DE); Schäfer, Wolfgang, 32548 Löhne (DE); Schneider, Uwe, 32457 Porta Westfalica (DE)
(74) Vertreter: COHAUSZ & FLORACK

(56) Entgegenhaltungen:
- EP-A- 0 556 635
- US-A- 5 007 291
- US-A- 5 174 155
- PATENT ABSTRACTS OF JAPAN vol. 005, no. 173 (P-087), 5. November 1981 (1981-11-05) & JP 56 100308 A (SUMITOMO METAL IND LTD), 12. August 1981 (1981-08-12)

## Beschreibung

Die Erfindung betrifft einen Scanner in einer Wanddickenmeßvorrichtung für Rohre mit mehreren um die Rohrachse herum stationär angeordneten Ultraschallsensoren, die an die Wand des zu messenden Rohres über eine Flüssigkeit akustisch ankoppelbar sind, wobei in den Zwischenraum zwischen den Ultraschallsensoren und der Rohrwand über Düsen Flüssigkeit eingedüst werden kann.

Zur Messung der Wanddicke können Ultraschallsensoren entweder unmittelbar oder mittelbar über eine Kopplungsflüssigkeit an der Rohrwand angekoppelt sein. Beim Scanner der eingangs genannten Art ist eine mittelbare Kopplung über eine Kopplungsflüssigkeit vorgesehen. Ferner ist bei Scannern zu unterscheiden zwischen solchen, bei denen der oder die Ultraschallsensoren mechanisch um das Rohr reversierend rotieren, und solchen, bei denen die Ultraschallsensoren stationär angeordnet sind, aber nacheinander derart angesteuert werden, daß man von einer elektronischen Rotation spricht. Sofern die Ultraschallsensoren mit Abstand von der Rohrwand stationär angeordnet sind, ist es wichtig, daß der Zwischenraum zwischen den Sensorflächen und der Rohrwand möglichst homogen mit der Kopplungsflüssigkeit ausgefüllt ist. Schon Luftblasen stören die Übertragung des Ultraschallmeßsignals. Deshalb ist bei einem bekannten Scanner der eingangs genannten Art vorgesehen, daß von Düsen Spülflüssigkeit in den Zwischenraum eingedüst wird. Bei diesem bekannten Scanner sind nur eine verhältnismäßig geringe Anzahl von Ultraschallsensoren um das Rohr herum verteilt angeordnet. Das bedeutet, daß die Rohrwand nicht über ihren gesamten Umfang, sondern nur an wenigen Stellen vermessen werden kann. Jeder Sensor ist in einem eigenen Halter gehalten. Das bedeutet, daß jeder Sensor einzeln auf das Rohr ausgerichtet werden muß. Der konstruktive Aufwand eines solchen Scanners und dessen Justierung sind deshalb aufwendig.

Bei einem bekannten Scanner in einer Wanddickenmeßvorrichtung für Rohre (EP 0 556 635 A2) sind mehrere Ultraschallsensoren um die Rohrachse herum stationär in einem hülsenförmigen äußeren Bauteil angeordnet, das konzentrisch zu einem inneren hülsenförmigen unmittelbar an der Rohrwand anliegenden Bauteil angeordnet ist. In den einzelnen Bauteilen aber auch zwischen ihnen sind Zufuhrkanäle und Ringräume angeordnet, denen über äußere Zuleitungen ein flüssiges Koppelmedium zugeführt wird. Von einem Ringraum gehen in Durchlaufrichtung des Rohres eingangsseitig angeordnete Sprühdüsen aus, deren austretendes Koppelmedium die Oberfläche des Rohres benetzt, um mit der Kopplungsflüssigkeit in den den Ultraschallsensoren vorgelagerten Kammern die Rohroberfläche möglichst blasenfrei benetzen zu können. In diesen den Ultraschallsensoren vorgelagerten Kammern findet praktisch keine Strömung statt. Es wird nur soviel Koppelmedium nachgeliefert, wie von dem passierenden Rohr verschleppt wird.

Der Erfindung liegt die Aufgabe zugrunde, einen Scanner der eingangs genannten Art zu schaffen, der einfach im Aufbau ist und aufwendige Justierarbeiten überflüssig macht.

Diese Aufgabe wird erfindungsgemäß dadurch gelöst, daß einerseits die Ultraschallsensoren und andererseits die Düsen zusammen mit einer gemeinsamen Zuleitung für die Spülflüssigkeit in einem einteiligen oder aus Segmenten zusammengesetzten Ring angeordnet sind, der konzentrisch zu einer Führungsbuchse oder Führungsscheibe fur das Rohr ausgerichtet ist.

Bei dem erfindungsgemäßen Scanner erübrigt sich die Einzeljustierung der Ultraschallsensoren, da diese ihren festen Platz im Ring haben und der Ring zur Führungsbuchse oder Führungsscheibe ausgerichtet ist. Der konstruktive Aufwand für den Scanner ist auch denkbar gering, da der Ring nicht nur die Aufnahmen für die Ultraschallsensoren, sondern auch die Düsen mit der gemeinsamen Zuleitung beinhaltet.

Vorzugsweise ist die gemeinsame Zuleitung ein im Ring ausgebildeter Ringkanal. Konstruktiv besonders einfach ist, wenn der Ringkanal als Nut ausgebildet ist, die durch eine Platte verschlossen ist, die als gemeinsamer Träger für den Ring und für die Führungsscheibe beziehungsweise die Führungsbuchse dient.

Die Fixierung der Ultraschallsensoren im Ring ist nach einer Ausgestaltung der Erfindung dadurch gekennzeichnet, daß sie in Taschen des Rings mit freiliegenden, dem Rohr zugekehrten Sensorflächen fixiert sind. Vor allem bei dieser Ausgestaltung der Erfindung können die Sensorflächen mechanisch geschützt und die Spülflüssigkeit gezielt von den einzelnen Düsen den zugeordneten Sensorflächen zugeführt werden, wenn die Sensorflächen der Ultraschallsensoren jeweils in voneinander getrennten halbschalenförmigen Nischen liegen, in die die Düsen einmünden. Dabei können die Nischen als Ausnehmungen im Ring ausgebildet sein.

Im folgenden wird die Erfindung anhand einer ein Ausführungsbeispiel darstellenden Zeichnung näher erläutert. Im einzelnen zeigen:

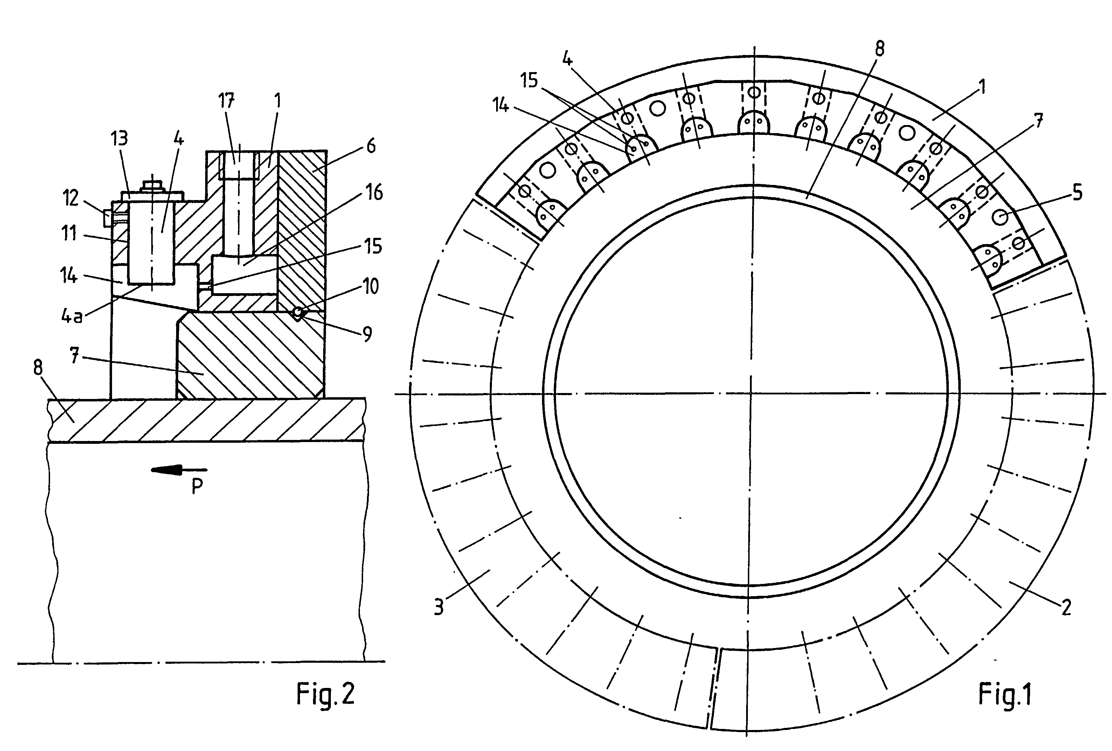

- Figur 1: einen Scanner einer Wanddickenmeßvorrichtung in Stirnansicht
und
- Figur 2: den Scanner gemäß Figur 1 im Halbschnitt.

Der Scanner weist einen aus drei Ringsegmenten 1,2,3 bestehenden Ring auf, in dem eine Vielzahl von Ultraschallsensoren 4 angeordnet sind. In der Zeichnung sind aus Vereinfachungsgründen die Ultraschallsensoren 4 nur für das obere Ringsegment 1 dargestellt. Die Ringsegmente 1,2,3 sind mit Schrauben 5 an einer ringförmigen Platte 6 befestigt, die ihrerseits an einer Wand eines nicht dargestellten geschlossenen Gehäuses befestigt ist. In der Ringplatte 6 steckt eine Führungsbuchse 7 für ein Rohr 8, dessen Wanddicke zu messen ist. Die Führungsbuchse 7 wird mittels einer in eine als Ringnut ausgebildete Rast 9 einrastenden, in der ringförmigen Platte 6 gehaltenen Ringfeder 10 in Position gehalten.

Das in der Wanddicke zu messende Rohr 8 liegt an der Innenseite der Führungsbuchse 7 an. Es durchläuft in Richtung eines Pfeils P das erwähnte Gehäuse. Dafür weist das Gehäuse einen abgedichteten Eingang und Ausgang auf. Es ist vollständig mit einer Kopplungsflüssigkeit, in der Regel Wasser, gefüllt.

Die Ultraschallsensoren 4 sitzen in Taschen 11 des Ringes 1 und sind in diesen Taschen 11 durch Schrauben 12 und/oder Kappen 13 axial fixiert. Ihre dem zu messenden Rohr 8 zugekehrten Sensorflächen 4a liegen frei und geschützt in Nischen 14, die eine Halbschalenform haben und als Ausnehmungen im Ring 1 ausgebildet sind.

In diese Nischen 14 münden Düsen 15, über die Spülflüssigkeit (Wasser) zuführbar ist, die die Sensorflächen 4a von Verunreinigungen und Luftblasen freihält. Die Düsen 15 werden aus einer gemeinsamen Zuleitung 16 gespeist, die als Ringnut im Ring 1 ausgebildet ist. Verschlossen wird sie durch die ringförmige Platte 6. Über einen Kanal 17 wird die gemeinsame Zuleitung 16 mit Spülflüssigkeit versorgt.

## Patentansprüche

1. Scanner in einer Wanddickenmeßvorrichtung für Rohre (8) mit mehreren um die Rohrachse herum stationär angeordneten Ultraschallsensoren (4), die an die Wand des zu messenden Rohres (8) über eine Flüssigkeit akustisch ankoppelbar sind, wobei in den Zwischenraum zwischen den Ultraschallsensoren (4) und der Rohrwand über Düsen (14) Spülflüssigkeit eingedüst werden kann,
**dadurch gekennzeichnet, daß** die Ultraschallsensoren (4) und die Düsen (15) zusammen mit einer gemeinsamen Zuleitung (16) für die Spülflüssigkeit in einem einteiligen oder aus Segmenten zusammengesetzten Ring (1,2,3) angeordnet sind, der konzentrisch zu einer Führungsbuchse (7) oder Führungsscheibe für das Rohr (8) ausgerichtet ist.

2. Scanner nach Anspruch 1,
**dadurch gekennzeichnet, daß** die gemeinsame Zuleitung (16) ein im Ring (1) ausgebildeter Ringkanal ist.

3. Scanner nach Anspruch 2,
**dadurch gekennzeichnet, daß** der Ringkanal (16) als Nut ausgebildet ist, die durch eine Platte (6) verschlossen ist, die als gemeinsamer Träger für den Ring (1) und die Führungsscheibe beziehungsweise die Führungsbuchse (7) dient.

4. Scanner nach einem der Ansprüche 1 bis 3,
**dadurch gekennzeichnet, daß** die Ultraschallsensoren (4) in Taschen (11) des Ringes (1) mit frei liegenden, dem Rohr (8) zugekehrten Sensorflächen (4a) fixiert sind.

5. Scanner nach einem der Ansprüche 1 bis 4,
**dadurch gekennzeichnet, daß** die Sensorflächen (4a) der Ultraschallsensoren (4) jeweils in voneinander getrennten, halbschalenförmigen Nischen (7) liegen, in die die Düsen (15) münden.

6. Scanner nach einem der Ansprüche 1 bis 5,
**dadurch gekennzeichnet, daß** die Nischen (7) als Ausnehmungen im Ring (1) ausgebildet sind.

## Claims

1. A scanner in a device for measuring the wall thickness of pipes (8) which comprises several ultrasonic sensors (4) that are stationarily arranged around the pipe axis and can be acoustically coupled to the wall of the pipe (8) to be measured by means of a fluid, wherein nozzles (14) inject a rinsing fluid into the intermediate space between the ultrasonic sensors (4) and the pipe wall, **characterized in that** the ultrasonic sensors (4) are arranged in a one-piece or segmental ring (1, 2, 3) together with the nozzles (15) and a common supply line (16) for the rinsing fluid, wherein said ring is aligned concentric to a guide bushing (7) or guide disk for the pipe (8).

2. The scanner according to Claim 1, **characterized in that** the common supply line (16) is realized in the form of an annular channel in the ring (1).

3. The scanner according to Claim 2, **characterized in that** the annular channel (16) is realized in the form of a groove that is closed with a plate (6) that serves as a common carrier for the ring (1) and for the guide disk or guide bushing (7), respectively.

4. The scanner according to one of Claims 1-3, **characterized in that** the ultrasonic sensors (4) are fixed in pockets (11) of the ring (1) such that the exposed sensor surfaces (4a) face the pipe (8).

5. The scanner according to one of Claims 1-4, **characterized in that** the sensor surfaces (4a) of the ultrasonic sensors (4) respectively lie in separate shell-shaped niches (7), into which the nozzles (15) discharge.

6. The scanner according to one of Claims 1-5, **characterized in that** the niches (7) are realized in the form of recesses in the ring (1).

## Revendications

1. Scanner installé dans un dispositif de mesure d'épaisseur de paroi pour des tubes (8) comportant une multiplicité de capteurs à ultrasons (4), qui sont disposés de façon fixe autour de l'axe de tube et qui peuvent être couplés acoustiquement à la paroi du tube à mesurer (8) au moyen d'un liquide, et dans lequel le liquide de balayage peut être injecté dans l'espace intercalaire présent entre les capteurs à ultrasons (4) et la paroi du tube, à l'aide de buses (14),
**caractérisé en ce que** les capteurs à ultrasons (4) et les buses (15) sont disposés conjointement avec une canalisation d'amenée commune (16) pour le liquide de balayage, dans un anneau (1,2,3), qui est monobloc ou est formé par la réunion de segments et qui est disposé concentriquement par rapport à une douille de guidage (7) ou un disque de guidage pour le tube (8).

2. Scanner selon la revendication 1, **caractérisé en ce que** la canalisation d'amenée commune (16) est un canal annulaire formé dans l'anneau (1).

3. Scanner selon la revendication 2, **caractérisé en ce que** le canal annulaire (16) est agencé sous la forme d'une rainure, qui est fermée par une plaque (6), qui est utilisée en tant que support commun pour l'anneau (1) et le disque de guidage ou le manchon de guidage (7).

4. Scanner selon l'une des revendications 1 à 3, **caractérisé en ce que** les capteurs à ultrasons (4) sont fixés dans des logements (11) de l'anneau (1) comportant des surfaces de capteur (4a) qui sont dégagées et sont tournées vers le tube (8).

5. Scanner selon l'une des revendications 1 à 4, **caractérisé en ce que** les surfaces (4a) de capteur des capteurs à ultrasons (4) sont situées respectivement dans des niches (7) séparées les unes des autres, en forme de demi-coques et dans lesquelles débouchent les buses (15).

6. Scanner selon l'une des revendications 1 à 5, **caractérisé en ce que** des niches (7) sont agencées sous la forme d'évidements formés dans l'anneau (1).
